# EUROPEAN PATENT APPLICATION

(11) **EP 3 786 129 A1**
(43) Date of publication of application: **03.03.2021**
(21) Application number: 19793624.8
(22) Date of filing: 15.03.2019
(51) Int. Cl.: C03C 27/06, E06B 3/66, E06B 3/677

(54) **GLASS PANEL UNIT AND GLASS WINDOW**

(30) Priority: 27.04.2018 JP 2018087726
(71) Applicant: Panasonic Intellectual Property Management Co., Ltd., Osaka-shi, Osaka 540-6207 (JP)
(72) Inventor: SHIMIZU, Takeshi, Osaka-shi, Osaka 540-6207 (JP); NONAKA, Masataka, Osaka-shi, Osaka 540-6207 (JP); ISHIKAWA, Haruhiko, Osaka-shi, Osaka 540-6207 (JP); URIU, Eiichi, Osaka-shi, Osaka 540-6207 (JP); HASEGAWA, Kazuya, Osaka-shi, Osaka 540-6207 (JP); ISHIBASHI, Tasuku, Osaka-shi, Osaka 540-6207 (JP); ABE, Hiroyuki, Osaka-shi, Osaka 540-6207 (JP)
(74) Representative: Müller-Boré & Partner Patentanwälte PartG mbB
(86) International application number: PCT/JP2019/010881
(87) International publication number: WO 2019/208017

(57) **Abstract**

An object of the present disclosure is to provide a glass panel unit with the ability to adsorb a gas in an evacuated space while maintaining sufficient strength. A glass panel unit (100) includes a first glass panel (1), a second glass panel (2), a third glass panel (3), a first evacuated space (6), a second evacuated space (7), and a gas adsorbent (8). The third glass panel (3) is arranged between the first glass panel (1) and the second glass panel (2). The first evacuated space (6) is created between the first glass panel (1) and the third glass panel (3). The second evacuated space (7) is created between the second glass panel (2) and the third glass panel (3). The gas adsorbent (8) is arranged, when viewed perpendicularly to a direction in which the first glass panel (1), the third glass panel (3), and the second glass panel (2) are laid one on top of another, between two surfaces (11, 21). One of the two surfaces (11, 21) is a surface (11), facing the third glass panel (3), of the first glass panel (1). The other of the two surfaces (11, 21) is a surface (21), facing the third glass panel (3), of the second glass panel (2).

## Description

### Technical Field

The present disclosure generally relates to a glass panel unit and a glass window, and more particularly relates to a glass panel unit including three glass panels and a glass window including such a glass panel unit.

### Background Art

A glass panel unit with an evacuated space provided between a pair of glass panels facing each other has been known in the art. In addition, a gas present in the evacuated space is adsorbed by putting a gas adsorbent (getter) in the evacuated space. For example, Patent Literature 1 discloses a vacuum insulated glazing (VIG) window unit, in which a space is provided between two glass substrates and in which a getter is disposed in a getter recess provided for one of the two glass substrates.

Providing such a recess for disposing the getter for a glass panel as is done in Patent Literature 1 causes a decrease in the strength of the glass panel because the recess reduces the thickness of the glass panel. In that case, deformation of the glass panel unit due to a temperature variation, for example, sometimes causes damage to the glass panel.

### Citation List

### Patent Literature

Patent Literature 1: JP-T-2015-529623 A

### Summary of Invention

It is therefore an object of the present disclosure to provide a glass panel unit with the ability to adsorb a gas in an evacuated space while maintaining sufficient strength and also provide a glass window including such a glass panel unit.

A glass panel unit according to an embodiment of the present disclosure includes a first glass panel, a second glass panel, a third glass panel, a first evacuated space, a second evacuated space, and a gas adsorbent. The third glass panel is arranged between the first glass panel and the second glass panel. The first evacuated space is created between the first glass panel and the third glass panel. The second evacuated space is created between the second glass panel and the third glass panel. The gas adsorbent is arranged, when viewed perpendicularly to a direction in which the first glass panel, the third glass panel, and the second glass panel are laid one on top of another, between two surfaces. One of the two surfaces is a surface, facing the third glass panel, of the first glass panel. The other of the two surfaces is a surface, facing the third glass panel, of the second glass panel.

A glass window according to another embodiment of the present disclosure includes the glass panel unit described above and a window frame surrounding peripheral edges of the glass panel unit.

### Brief Description of Drawings

FIG. 1A is a partially cutaway perspective view illustrating an example of a glass panel unit according to an exemplary embodiment of the present disclosure;
FIG. 1B is a cross-sectional view taken along the plane X-X of the glass panel unit shown in FIG. 1A;
FIG. 2 is a schematic front view illustrating an example of a glass window according to an exemplary embodiment of the present disclosure;
FIG. 3 is a cross-sectional view illustrating an exemplary glass panel unit according to a first variation;
FIG. 4A is a cross-sectional view illustrating an exemplary glass panel unit according to a second variation; and
FIG. 4B is a plan view illustrating, on a larger scale, a main part of the exemplary glass panel unit according to the second variation.

### Description of Embodiments

### 1. Overview

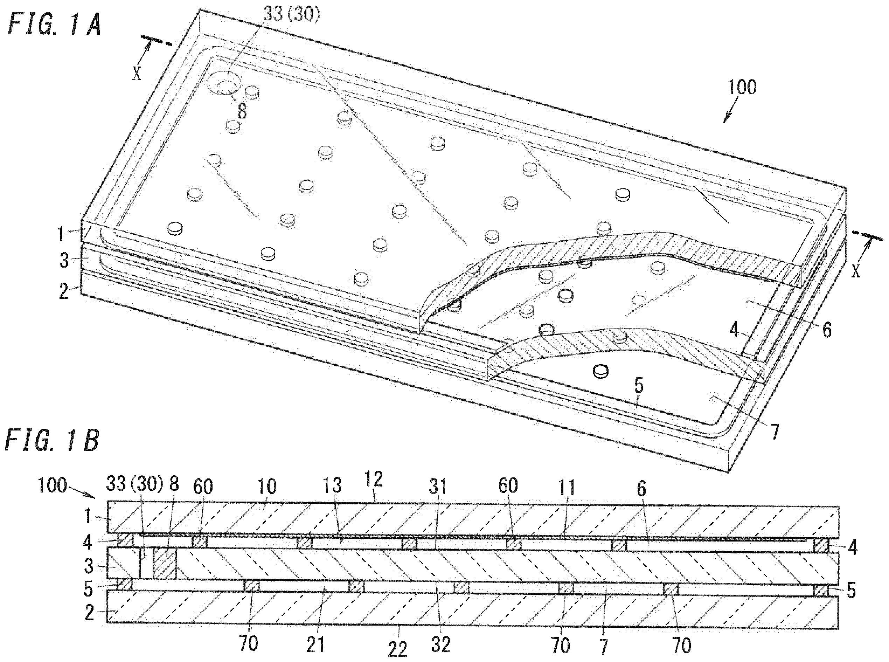

As shown in FIGS. 1A and 1B, a glass panel unit 100 according to an exemplary embodiment includes a first glass panel 1, a second glass panel 2, a third glass panel 3, a first evacuated space 6, a second evacuated space 7, and a gas adsorbent 8. The third glass panel 3 is arranged between the first glass panel 1 and the second glass panel 2. The first evacuated space 6 is created between the first glass panel 1 and the third glass panel 3. The second evacuated space 7 is created between the second glass panel 2 and the third glass panel 3. The gas adsorbent 8 is arranged, when viewed perpendicularly to a direction in which the first glass panel 1, the third glass panel 3, and the second glass panel 2 are laid one on top of another, between two surfaces 11, 21. One of the two surfaces 11, 21 is a surface 11, facing the third glass panel 3, of the first glass panel 1. The other of the two surfaces 11, 21 is a surface 21, facing the third glass panel 3, of the second glass panel 2.

A glass panel unit 100 according to this embodiment allows a gas present in the evacuated space (which may be either the first evacuated space 6 or the second evacuated space 7) to be adsorbed by the gas adsorbent 8. The gas adsorbent 8 is arranged between the two surfaces 11, 21. Thus, this facilitates maintaining sufficient strength for the glass panel unit 100 compared to providing the gas adsorbent by subjecting the first glass panel 1 or the second glass panel 2 to some type of machining such as counterboring. Consequently, the glass panel unit 100 is able to adsorb the gas present in the evacuated space (which may be either the first evacuated space 6 or the second evacuated space 7) while maintaining sufficient strength.

### 2. Details

Next, the glass panel unit 100 according to this embodiment will be described in detail with reference to FIGS. 1A and 1B. In FIGS. 1A and 1B, respective constituent elements of the glass panel unit 100 according to this embodiment are illustrated schematically. That is to say, the dimensions and shapes of respective constituent elements of the glass panel unit 100 may be different from their actual dimensions and shapes.

### 2-1. Glass panel unit

The glass panel unit 100 includes the first glass panel 1, the second glass panel 2, and the third glass panel 3 as described above. The third glass panel 3 is arranged between the first glass panel 1 and the second glass panel 2. Thus, the first glass panel 1 faces the third glass panel 3 and the second glass panel 2 also faces the third glass panel 3. In the following description, the direction in which the first glass panel 1, the second glass panel 2, and the third glass panel 3 are laid one on top of another will be hereinafter referred to as a "thickness direction."

In the glass panel unit 100, when viewed perpendicularly to the thickness direction, a first seal 4 is arranged between the first glass panel 1 and the third glass panel 3. The first seal 4 according to this embodiment has the shape of a frame to hermetically bond the first glass panel 1 and the third glass panel 3 together. In addition, in the glass panel unit 100, when viewed perpendicularly to the thickness direction, a second seal 5 is arranged between the second glass panel 2 and the third glass panel 3. The second seal 5 according to this embodiment has the shape of a frame to hermetically bond the second glass panel 2 and the third glass panel 3 together.

Thus, in this glass panel unit 100, the first glass panel 1, the first seal 4, the third glass panel 3, the second seal 5, and the second glass panel 2 are stacked one on top of another in this order.

In addition, the glass panel unit 100 further has a first evacuated space 6 and a second evacuated space 7. The first evacuated space 6 is a space surrounded with the first glass panel 1, the third glass panel 3, and the first seal 4. The second evacuated space 7 is a space surrounded with the second glass panel 2, the third glass panel 3, and the second seal 5.

Thus, in this glass panel unit 100, the first glass panel 1 and the third glass panel 3 face each other with the first evacuated space 6 interposed between them. Also, in this glass panel unit 100, the second glass panel 2 and the third glass panel 3 face each other with the second evacuated space 7 interposed between them.

The glass panel unit 100 further has a connection space 30 communicating with the first evacuated space 6 and the second evacuated space 7. The connection space 30 according to this embodiment is a through hole 33 provided through the third glass panel 3. In this embodiment, the gas adsorbent 8 is provided inside the through hole 33, and therefore, is placed between the first surface 11 and the first surface 21 when viewed perpendicularly to the thickness direction.

Thus, the glass panel unit 100 according to this embodiment includes the first glass panel 1, the second glass panel 2, the third glass panel 3, the first seal 4, the second seal 5, the first evacuated space 6, the second evacuated space 7, the connection space 30, and the gas adsorbent 8. Next, these constituent elements of the glass panel unit 100 will be described in further detail one by one.

### (1) First glass panel

The first glass panel 1 includes a panel body 10 and a low-emissivity film 13.

The panel body 10 is a plate member of glass (i.e., a glass pane). The panel body 10 may have a rectangular shape in a plan view (see FIG. 1A). However, when viewed in plan, the panel body 10 does not have to have a rectangular shape but may also have a triangular or any other polygonal shape, a circular shape, or an elliptical shape.

Examples of materials for the panel body 10 include soda lime glass, high strain point glass, chemically tempered glass, alkali-free glass, quartz glass, Neoceram, and thermally tempered glass.

The thickness of the panel body 10 is not particularly limited but may fall within the range from 1 mm to 10 mm, for example.

The panel body 10 has a first surface 11 facing the third glass panel 3 and a second surface 12 exposed to the environment outside of this glass panel unit 100 (see FIG. 1B). Thus, the first surface 11 is located in the first evacuated space 6. Meanwhile, the second surface 12 forms part of the outer surfaces of the glass panel unit 100.

The low-emissivity film 13 is provided on the first surface 11 (see FIG. 1B). Thus, the low-emissivity film 13 is located in the first evacuated space 6. The low-emissivity film 13 is directly in contact with the first surface 11. The low-emissivity film 13 is a film containing a metal with low-emissivity. The low-emissivity film 13 has the capability of reducing heat transfer due to radiation. This reduces the transfer of the heat generated by the light irradiating the second surface 12 to the first evacuated space 6, thus improving the thermal insulation properties of the glass panel unit 100. Examples of metals having low-emissivity and contained in the low-emissivity film 13 include silver.

### (2) Second glass panel

The second glass panel 2 is a plate member of glass (i.e., a glass pane). When viewed in plan, the second glass panel 2 and the panel body 10 may have the same shape (see FIG. 1A).

Examples of materials for the second glass panel 2 include soda lime glass, high strain point glass, chemically tempered glass, alkali-free glass, quartz glass, Neoceram, and thermally tempered glass. The material for the second glass panel 2 may be the same as, or different from, the material for the first glass panel 1, whichever is appropriate.

The thickness of the second glass panel 2 is not particularly limited but may fall within the range from 1 mm to 10 mm, for example. The thickness of the second glass panel 2 may be the same as, or different from, the thickness of the panel body 10, whichever is appropriate.

The second glass panel 2 has a first surface 21 facing the third glass panel 3 and a second surface 22 forming part of the outer surfaces of the glass panel unit 100 (see FIG. 1B). Thus, the first surface 21 is located in the second evacuated space 7. Meanwhile, the second surface 22 is exposed to the external environment and forms part of the outer surfaces of the glass panel unit 100.

### (3) Third glass panel

The third glass panel 3 is a plate member of glass (i.e., a glass pane). When viewed in plan, the third glass panel 3, the panel body 10, and the second glass panel 2 may have the same shape (see FIG. 1A).

Examples of materials for the third glass panel 3 include soda lime glass, high strain point glass, chemically tempered glass, alkali-free glass, quartz glass, Neoceram, and thermally tempered glass. The material for the third glass panel 3 may be the same as, or different from, the material for the panel body 10, whichever is appropriate. The material for the third glass panel 3 may be the same as, or different from, the material for the second glass panel 2, whichever is appropriate.

The thickness of the third glass panel 3 is not particularly limited but may fall within the range from 1 mm to 10 mm, for example.

The third glass panel 3 has a first surface 31 facing the first glass panel 1 and a second surface 32 facing the second glass panel 2 (see FIG. 1B). Thus, the first surface 31 is located in the first evacuated space 6, and the second surface 32 is located in the second evacuated space 7.

### (4) First seal

The first seal 4 is a frame-shaped member (see FIG. 1A). In this embodiment, since the first glass panel 1 and the third glass panel 3 have a rectangular shape in a plan view, the first seal 4 is a member with a rectangular frame shape. The first seal 4 is provided between the first glass panel 1 and the third glass panel 3 to hermetically bond the first glass panel 1 and the third glass panel 3 together. The first seal 4 is directly in contact with the first surface 11 of the panel body 10 and is also directly in contact with the first surface 31 of the third glass panel 3. Thus, the low-emissivity film 13 provided on the first surface 11 of the panel body 10 is suitably located inside the first seal 4. This allows the low-emissivity film 13 and the first seal 4 to be arranged such that the low-emissivity film 13 is directly in contact with the first surface 11 and the first seal 4 is directly in contact with the first surface 11. For example, after the low-emissivity film 13 has been formed over substantially the entire first surface 11, a peripheral part, in which the first seal 4 will be formed, of the low-emissivity film 13 may be removed and then the first seal 4 may be formed there.

The first seal 4 is made of a hot glue. The hot glue may be a glass frit such as a low-melting glass frit, for example. Examples of the low-melting glass frits include a bismuth-based glass frit, a lead-based glass frit, and a vanadium-based glass frit. The first seal 4 may contain at least one of these low-melting glass frits.

### (5) Second seal

The second seal 5, as well as the first seal 4, is a rectangular frame shaped member (see FIG. 1A). The second seal 5 is provided between the second glass panel 2 and the third glass panel 3 to hermetically bond the second glass panel 2 and the third glass panel 3 together. Thus, the second seal 5 is directly in contact with the first surface 21 of the second glass panel 2 and is also directly in contact with the second surface 32 of the third glass panel 3. The second seal 5 may be made of the same hot glue as the first seal's 4.

### (6) First evacuated space

The first evacuated space 6 is a space surrounded with the first glass panel 1, the third glass panel 3, and the first seal 4 as described above (see FIG. 1B). More specifically, the first evacuated space 6 is a space surrounded with the first surface 11 of the first glass panel 1, the first surface 31 of the third glass panel 3, and the first seal 4.

The first evacuated space 6 is suitably a space, of which the degree of vacuum has been decreased to 0.1 Pa or less. This would improve the thermal insulation properties of the glass panel unit 100.

In this embodiment, a plurality of first spacers 60 are arranged in the first evacuated space 6 as shown in FIG. 1B. That is to say, the plurality of first spacers 60 are arranged between the first glass panel 1 and the third glass panel 3. The plurality of first spacers 60 allows a gap distance to be maintained between the first glass panel 1 and the third glass panel 3. This ensures a predetermined gap distance between the first glass panel 1 and the third glass panel 3 with reliability and also ensures a predetermined thickness for the first evacuated space 6.

Each of the first spacers 60 is a columnar member. The height of the first spacers 60 (i.e., their dimension in the thickness direction) is set appropriately according to the gap distance between the first glass panel 1 and the third glass panel 3. That is to say, the gap distance between the first glass panel 1 and the third glass panel 3 (i.e., the thickness of the first evacuated space 6) is defined by the height of the first spacers 60. The first spacers 60 may have a height falling within the range from 10 µm to 1,000 µm, for example. The first spacers 60 may have a diameter falling within the range from 0.1 mm to 10 mm, for example. For example, the first spacers 60 may have a diameter of 0.5 mm and a height of 100 µm. The first spacers 60 do not have to have the columnar shape but may also have a prismatic shape or a spherical shape.

The first spacers 60 are suitably transparent. This reduces the chances of the first spacers 60 being conspicuous in the glass panel unit 100, thus improving the appearance of the glass panel unit 100.

The first spacers 60 are suitably made of a resin such as a polyimide resin. This would reduce the thermal conductivity of the first spacers 60 and would also reduce the chances of heat being transferred between the first glass panel 1 and the third glass panel 3, both of which are in contact with the first spacers 60.

### (7) Second evacuated space

The second evacuated space 7 is a space surrounded with the second glass panel 2, the third glass panel 3, and the second seal 5 as described above (see FIG. 1B). More specifically, the second evacuated space 7 is a space surrounded with the first surface 21 of the second glass panel 2, the second surface 32 of the third glass panel 3, and the second seal 5.

The second evacuated space 7 is suitably a space, of which the degree of vacuum has been decreased to 0.1 Pa or less. This would improve the thermal insulation properties of the glass panel unit 100. Particularly, the glass panel unit 100 according to this embodiment has two evacuated spaces, namely, the first evacuated space 6 and the second evacuated space 7, and therefore, exhibits better thermal insulation properties than a glass panel unit with a single evacuated space.

In this embodiment, a plurality of second spacers 70 are arranged in the second evacuated space 7. That is to say, the plurality of second spacers 70 are arranged between the second glass panel 2 and the third glass panel 3. The plurality of second spacers 70 allows the gap distance between the second glass panel 2 and the third glass panel 3 to be maintained. This ensures a predetermined gap distance between the second glass panel 2 and the third glass panel 3 with reliability and also ensures a predetermined thickness for the second evacuated space 7.

Each of the second spacers 70 is a columnar member. The height of the second spacers 70 (i.e., their dimension in the thickness direction) is set appropriately according to the gap distance between the second glass panel 2 and the third glass panel 3. That is to say, the gap distance between the second glass panel 2 and the third glass panel 3 (i.e., the thickness of the second evacuated space 7) is defined by the height of the second spacers 70. The second spacers 70 may have a height falling within the range from 10 µm to 1,000 µm, for example. The second spacers 70 may have a diameter falling within the range from 0.1 mm to 10 mm, for example. For example, the second spacers 70 may have a diameter of 0.5 mm and a height of 100 µm. The second spacers 70 do not have to have the columnar shape but may also have a prismatic shape or a spherical shape.

The second spacers 70 are suitably transparent. This reduces the chances of the second spacers 70 being conspicuous in the glass panel unit 100, thus improving the appearance of the glass panel unit 100.

The second spacers 70 are suitably made of a resin such as a polyimide resin. This would reduce the thermal conductivity of the second spacers 70 and would also reduce the chances of heat being transferred between the second glass panel 2 and the third glass panel 3, both of which are in contact with the second spacers 70.

### (8) Connection space

As described above, the connection space 30 communicates with the first evacuated space 6 and the second evacuated space 7. The connection space 30 according to this embodiment is a through hole 33 provided through the third glass panel 3. The through hole 33 runs through the third glass panel 3 in the thickness direction. Thus, the through hole 33 also communicates with the first evacuated space 6 and the second evacuated space 7. The through hole 33 may be provided for any position of the third glass panel 3 without limitation.

The through hole 33 according to this embodiment has a circular shape in a plan view. The dimension of the through hole 33 may be set appropriately according to the dimension of the gas adsorbent put inside the through hole 33. For example, the through hole 33 may have a diameter falling within the range from 10 mm to 30 mm. When viewed in plan, the through hole 33 does not have to have a circular shape but may also have a rectangular shape, a triangular or any other polygonal shape, or an elliptical shape.

### (9) Gas adsorbent

The gas adsorbent 8 has the capability of adsorbing gas molecules. When viewed perpendicularly to the thickness direction, the gas adsorbent 8 is provided between the first surface 11 of the first glass panel 1 and the first surface 21 of the second glass panel 2. Specifically, at least part of the gas adsorbent 8 is placed inside the through hole 33 (see FIG. 1B). The gas adsorbent 8 may or may not be placed entirely inside the through hole 33. The through hole 33 communicates with the first evacuated space 6 and the second evacuated space 7, and therefore, the gas adsorbent 8 provided in the through hole 33 is able to adsorb the gas present in the first evacuated space 6 and the second evacuated space 7. This allows the first evacuated space 6 and the second evacuated space 7 to have an increased degree of vacuum, thus improving the thermal insulation properties of the glass panel unit 100.

In addition, in this embodiment, the through hole 33 is provided with the gas adsorbent 8 but neither the first glass panel 1 nor the second glass panel 2 is provided with the gas adsorbent 8. Therefore, neither the first glass panel 1 nor the second glass panel 2 is subjected to machining for providing the gas adsorbent 8, thus curbing a decline in the strength of the glass panel unit 100.

In addition, providing the gas adsorbent 8 for the first glass panel 1 or the second glass panel 2 increases the chances of the volume of the gas adsorbent 8 being limited. In contrast, in the glass panel unit 100 according to this embodiment, the thickness of the third glass panel 3 ensures a sufficient space for placing the gas adsorbent 8. Thus, the glass panel unit 100 according to this embodiment reduces the chances of the volume of the gas adsorbent 8 being limited and allows the gas adsorbent 8 to be provided to the amount required to adsorb the gas in the first evacuated space 6 and the second evacuated space 7. In this embodiment, the thickness of the gas adsorbent 8 is suitably greater than the thickness of the first evacuated space 6 or the thickness of the second evacuated space 7. This reduces the chances of the gas adsorbent 8 moving within the first evacuated space 6 or the second evacuated space 7. In addition, the thickness of the gas adsorbent 8 needs to be less than the sum of the respective thicknesses of the first evacuated space 6, the second evacuated space 7, and the third glass panel 3.

The gas adsorbent 8 may contain a metallic getter material, for example. The metallic getter material is a getter material with a metallic surface provided to chemically adsorb gas molecules. The metallic getter material may be, for example, a zirconium-based alloy getter material (such as a Zr-Al getter material or a Zr-V-Fe getter material) or a titanium-based alloy getter material. The metallic getter material such as these is able to adsorb molecules of a gas such as H₂O, N₂, O₂, H₂, or CO₂. Heating and activating any of these metallic getter materials allows the gas molecules (chemically) adsorbed onto the metallic surface of the metallic getter material to diffuse inside the metallic getter material. Thus, the gas adsorbent 8 containing the metallic getter material allows the gas molecules such as H₂O, N₂, O₂, H₂, or CO₂ in the first evacuated space 6 or the second evacuated space 7 to be adsorbed.

When the gas adsorbent 8 contains a metallic getter material, the metallic getter material may be covered with a non-metallic getter material. The non-metallic getter material has a porous structure with the ability to adsorb gas molecules. Examples of the non-metallic getter materials include zeolite-based, active carbon, and magnesium oxide getter materials. The zeolite-based getter materials include an ion-exchanged zeolite. Examples of ion exchange materials include K, NH₄, Ba, Sr, Na, Ca, Fe, Al, Mg, Li, H, and Cu. Each of these non-metallic getter materials is able to adsorb molecules of a gas such as hydrocarbon-based gases (such as CH₄ and C₂H₆) and an ammonia gas (NH₃) that a metallic getter material would be unable to adsorb. In addition, heating and activating any of these non-metallic getter materials allows the gas molecules adsorbed onto the porous structure of the non-metallic getter material to be dissociated.

### (10) Method for manufacturing glass panel unit

The glass panel unit 100 may be manufactured by the following method, for example.

First, a hot glue is applied in a frame shape on the first surface 11 of the first glass panel 1. Next, the third glass panel 3 is laid on top of the first glass panel 1 with the hot glue in the frame shape interposed between them. Subsequently, a hot glue is applied in a frame shape on the second surface 22 of the third glass panel 3. Next, the second glass panel 2 is laid on top of the third glass panel 3 with the hot glue in the frame shape interposed between them. Thereafter, the space surrounded with the first glass panel 1, the third glass panel 3, and the hot glue in the frame shape and the space surrounded with the second glass panel 2, the third glass panel 3, and the hot glue in the frame shape are heated. In this manner, a first seal 4 and a second seal 5 are formed out of the hot glue in the frame shape. Furthermore, a gas is exhausted from the space surrounded with the first glass panel 1, the third glass panel 3, and the hot glue, and a gas is also exhausted from the space surrounded with the second glass panel 2, the third glass panel 3, and the hot glue. In this case, the two spaces communicate with each other via the through hole 33 of the third glass panel. Thus, exhausting the gas from one of these two spaces allows the gas to be exhausted from the other space as well. This allows the first evacuated space 6 and the second evacuated space 7 to be formed, thus having the glass panel unit 100 manufactured.

### 2-2. Glass window

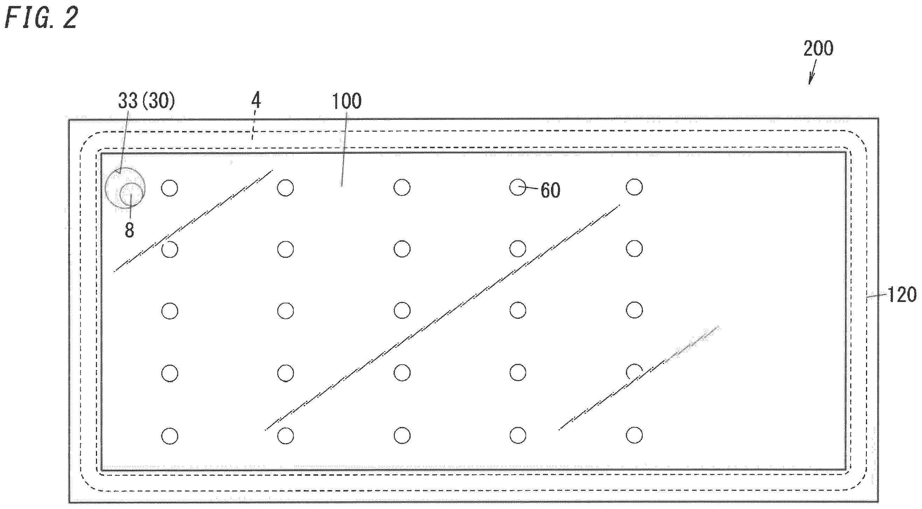

As shown in FIG. 2, a glass window 200 according to this embodiment includes the glass panel unit 100 described above and a window frame 120.

The window frame 120 surrounds the peripheral edges of the glass panel unit 100. The planar shape of the window frame 120 is determined appropriately according to the planar shape of the glass panel unit 100, i.e., the shape of the first glass panel 1, the second glass panel 2, and the third glass panel 3 in a plan view.

The glass window 200 is manufactured by fitting the glass panel unit 100 into the window frame 120, for example.

The glass panel unit 100 includes the first evacuated space 6 and the second evacuated space 7, and therefore, has excellent thermal insulation properties. Thus, the glass window 200 including the glass panel unit 100 also exhibits excellent thermal insulation properties.

In the glass panel unit 100, the gas adsorbent 8 is provided in the through hole 33 provided through the third glass panel 3. Thus, compared to a situation where the gas adsorbent is provided in the first glass panel 1 or the second glass panel 2, the glass panel unit 100 has increased strength. Therefore, a glass window 200 including such a glass panel unit 100 also has increased strength.

### 3. Variations

The glass panel unit 100 does not have to have the configuration described above.

For example, at least part of the first seal 4 and at least part of the second seal 5 may be integrated together.

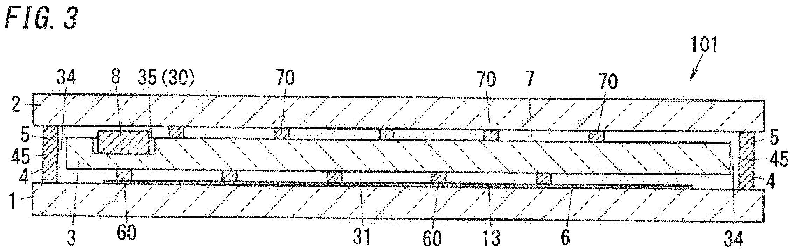

For example, a glass panel unit 101 according to a first variation shown in FIG. 3 includes a third seal 45 in which the first seal 4 and the second seal 5 are integrated together. The third seal 45 is formed in the shape of a frame to hermetically bond the first glass panel 1 and the second glass panel 2 together. In this glass panel unit 101, the planar dimensions of the third glass panel 3 are smaller than those of the first glass panel 1 and the second glass panel 2. That is to say, the third glass panel 3 is arranged in the space surrounded with the first glass panel 1, the second glass panel 2, and the third seal 45. In addition, the first evacuated space 6 and the second evacuated space 7 communicate with each other through a gap 34 between the third glass panel 3 and the third seal 45. Thus, the gap 34 between the third glass panel 3 and the third seal 45 serves as a connection space 30. Besides, the third glass panel 3 further has a recess 35 (counterbored portion) depressed in the thickness direction. At least part of the gas adsorbent 8 is placed in the recess 35. That is to say, the gas adsorbent 8 may or may not be placed entirely in the recess 35. In this glass panel unit 101, the gas adsorbent 8 provided in the recess 35 is able to adsorb the gas present in the first evacuated space 6 and the second evacuated space 7. In addition, the glass panel unit 101 also eliminates the need to make machining to provide the gas adsorbent 8 for the first glass panel 1 or the second glass panel 2.

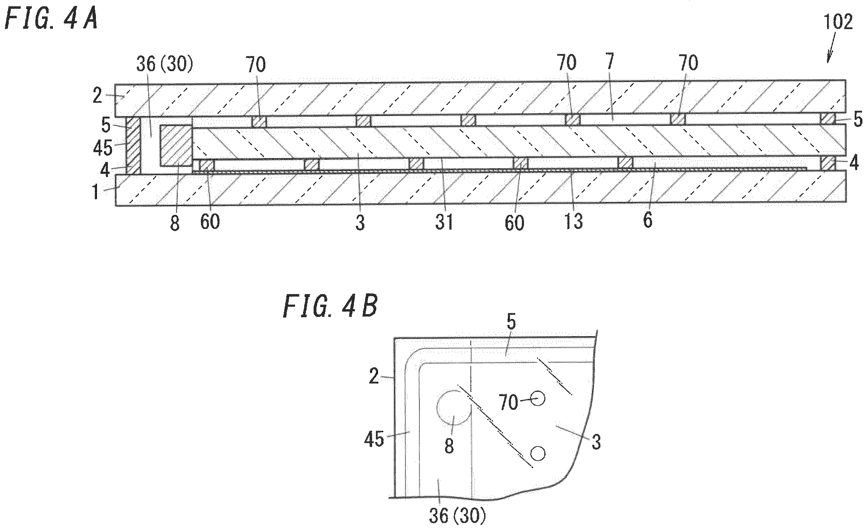

For example, a glass panel unit 102 according to a second variation shown in FIGS. 4A and 4B includes not only the first seal 4 for bonding the first glass panel 1 and the third glass panel 3 together and the second seal 5 for bonding the second glass panel 2 and the third glass panel 3 together but also a third seal 45 as well. In this third seal 45, part of the first seal 4 and part of the second seal 5 are integrated together. The third seal 45 is provided between the first glass panel 1 and the second glass panel 2 to bond the first glass panel 1 and the second glass panel 2 together. The third glass panel 3 has a gap 36 between itself and the third seal 45. The first evacuated space 6 and the second evacuated space 7 communicate with each other through this gap 36. Thus, the gap 36 between the third glass panel 3 and the third seal 45 serves as a connection space 30. At least part of the gas adsorbent 8 is placed in the gap 36. That is to say, the gas adsorbent 8 may or may not be placed entirely in the gap 36. In this glass panel unit 102, the gas adsorbent 8 provided in the gap 36 is able to adsorb the gas present in the first evacuated space 6 and the second evacuated space 7. In addition, the glass panel unit 102 also eliminates the need to make machining to provide the gas adsorbent 8 for the first glass panel 1 or the second glass panel 2.

For example, the glass panel unit 100 shown in FIG. 1A has the connection space 30. However, this is only an example and should not be construed as limiting. For example, the glass panel unit 100 may have no connection space 30 so that the first evacuated space 6 and the second evacuated space 7 do not communicate with each other but are independent of each other. For example, in the glass panel unit 100, the third glass panel 3 may have no through holes 33. In that case, the recess 35 of the glass panel unit 101 may be provided for the third glass panel 3 such that the recess 35 receives the gas adsorbent 8. The gas adsorbent 8 may adsorb the gas present in the first evacuated space 6 or the second evacuated space 7.

In the glass panel unit 100 shown in FIGS. 1A and 1B, no low-emissivity film is provided on the first surface 21 of the second glass panel 2. However, this configuration is only an example and should not be construed as limiting. Alternatively, a low-emissivity film of the same type as the low-emissivity film 13 may be provided on the first surface 21 of the second glass panel 2.

In the glass panel unit 100 shown in FIGS. 1A and 1B, the first spacers 60 are arranged between the first glass panel 1 and the third glass panel 3, and the second spacers 70 are arranged between the second glass panel 2 and the third glass panel 3. However, this configuration is only an example and should not be construed as limiting. For example, the first spacers 60 may be arranged between the first glass panel 1 and the third glass panel 3 but no second spacers 70 may be arranged between the second glass panel 2 and the third glass panel 3. In that case, the second evacuated space 7 may be maintained by the second seal 5. Alternatively, no first spacers 60 may be arranged between the first glass panel 1 and the third glass panel 3 but the second spacers 70 may be arranged between the second glass panel 2 and the third glass panel 3. In that case, the first evacuated space 6 may be maintained by the first seal 4. Still alternatively, no first spacers 60 may be arranged between the first glass panel 1 and the third glass panel 3 and no second spacers 70 may be arranged between the second glass panel 2 and the third glass panel 3. In that case, the first evacuated space 6 may be maintained by the first seal 4 and the second evacuated space 7 may be maintained by the second seal 5.

### 4. Resume

A glass panel unit (100, 101, 102) according to a first aspect includes a first glass panel (1), a second glass panel (2), a third glass panel (3), a first evacuated space (6), a second evacuated space (7), and a gas adsorbent (8). The third glass panel (3) is arranged between the first glass panel (1) and the second glass panel (2). The first evacuated space (6) is created between the first glass panel (1) and the third glass panel (3). The second evacuated space (7) is created between the second glass panel (2) and the third glass panel (3). The gas adsorbent (8) is arranged, when viewed perpendicularly to a direction in which the first glass panel (1), the third glass panel (3), and the second glass panel (2) are laid one on top of another, between two surfaces (11, 21). One of the two surfaces (11, 21) is a surface (11), facing the third glass panel (3), of the first glass panel (1). The other of the two surfaces (11, 21) is a surface (21), facing the third glass panel (3), of the second glass panel (2).

This configuration allows the gas adsorbent (8) to adsorb a gas present in the evacuated spaces (including the first evacuated space (6) and the second evacuated space (7)). The gas adsorbent (8) is arranged between the two surfaces (11, 21). Thus, this facilitates maintaining sufficient strength for the glass panel unit (100, 101, 102) compared to providing the gas adsorbent (8) by subjecting the first glass panel (1) or the second glass panel (2) to some type of machining such as counterboring.

A glass panel unit (100, 101, 102) according to a second aspect, which may be implemented in conjunction with the first aspect, further has a connection space (30) communicating with the first evacuated space (6) and the second evacuated space (7).

This configuration allows the gas adsorbent (8) to adsorb a gas present in the first evacuated space (6) and the second evacuated space (7)). In addition, this configuration also enables the first evacuated space (6) and the second evacuated space (7) to be formed at a time by performing an evacuation process only once.

A glass panel unit (100) according to a third aspect, which may be implemented in conjunction with the first or second aspect, further includes a first seal (4) and a second seal (5). The first seal (4) is arranged, when viewed perpendicularly to the direction in which the first glass panel (1), the third glass panel (3), and the second glass panel (2) are laid one on top of another, between the first glass panel (1) and the third glass panel (3). The second seal (5) is arranged, when viewed perpendicularly to the direction in which the first glass panel (1), the third glass panel (3), and the second glass panel (2) are laid one on top of another, between the second glass panel (2) and the third glass panel (3).

This configuration allows the first glass panel (1) and the third glass panel (3) to be bonded together with the first seal (4), and also allows the second glass panel (2) and the third glass panel (3) to be bonded together with the second seal (5).

In a glass panel unit (100) according to a fourth aspect, which may be implemented in conjunction with the third aspect, the first seal (4) has a shape of a frame to hermetically bond the first glass panel (1) and the third glass panel (3) together. The second seal 5 has a shape of a frame to hermetically bond the second glass panel (2) and the third glass panel (3) together. The first evacuated space (6) is a space surrounded with the first glass panel (1), the third glass panel (3), and the first seal (4). The second evacuated space (7) is a space surrounded with the second glass panel (2), the third glass panel (3), and the second seal (5). The connection space (30) is a through hole (33) provided through the third glass panel (3). At least part of the gas adsorbent (8) is placed inside the through hole (33).

This configuration allows the first evacuated space (6) and the second evacuated space (7) to improve the thermal insulation properties of the glass panel unit (100). In addition, this also allows the gas adsorbent (8) provided in the through hole (33) to adsorb the gas present in the first evacuated space (6) and the second evacuated space (7).

A glass panel unit (100) according to a fifth aspect, which may be implemented in conjunction with the third aspect, further includes a third seal (45) in which at least a part of the first seal (4) and the second seal (5) are integrated together.

This configuration allows the third seal (45) to bond the first glass panel (1) and the second glass panel (2) together.

In a glass panel unit (102) according to a sixth aspect, which may be implemented in conjunction with the third or fifth aspect, the third glass panel (3) has a recess (35) depressed in a thickness direction, and at least part of the gas adsorbent (8) is placed inside the recess (35)

This configuration allows the gas adsorbent (8) provided in the recess (35) to adsorb the gas present in the evacuated spaces (including the first evacuated space (6) and the second evacuated space (7)).

In a glass panel unit (102) according to a seventh aspect, which may be implemented in conjunction with the fifth aspect, the connection space (30) is a gap (36) between the third glass panel (3) and the third seal (45), and at least part of the gas adsorbent (8) is placed inside the gap (36).

This configuration allows the gas adsorbent (8) provided in the gap (36) to adsorb the gas present in the evacuated spaces (including the first evacuated space (6) and the second evacuated space (7)).

A glass panel unit (100, 101, 102) according to an eighth aspect, which may be implemented in conjunction with any one of the first to seventh aspects, further includes first spacer(s) (60) arranged between the first glass panel (1) and the third glass panel (3).

This configuration allows a predetermined gap distance to be maintained between the first glass panel (1) and the third glass panel (3), thus ensuring a sufficient thickness for the first evacuated space (6).

A glass panel unit (100, 101, 102) according to a ninth aspect, which may be implemented in conjunction with any one of the first to eighth aspects, further includes second spacer(s) (70) arranged between the second glass panel (2) and the third glass panel (3).

This configuration allows a predetermined gap distance to be maintained between the second glass panel (2) and the third glass panel (3), thus ensuring a sufficient thickness for the second evacuated space (7).

In a glass panel unit (100, 101, 102) according to a tenth aspect, which may be implemented in conjunction with any one of the first to ninth aspects, neither the first glass panel (1) nor the second glass panel (2) is provided with the gas adsorbent.

This configuration eliminates the need to perform machining for providing the gas adsorbent for the first glass panel (1) or the second glass panel (2), thus increasing the strength of the glass panel unit (100).

A glass window (200) according to an eleventh aspect includes the glass panel unit (100, 101, 102) according to any one of the first to tenth aspects and a window frame (120) surrounding peripheral edges of the glass panel unit (100, 101, 102).

This configuration allows the glass window (200) to exhibit excellent thermal insulation properties and sufficient strength.

### Reference Signs List

- 1: First Glass Panel
- 11: Surface (First Surface)
- 2: Second Glass Panel
- 21: Surface (First Surface)
- 3: Third Glass Panel
- 30: Connection Space
- 33: Through Hole
- 35: Recess
- 36: Gap
- 4: First Seal
- 5: Second Seal
- 45: Third Seal
- 6: First Evacuated Space
- 60: First Spacer
- 7: Second Evacuated Space
- 70: Second Spacer
- 8: Gas Adsorbent
- 100, 101, 102: Glass Panel Unit
- 120: Window Frame
- 200: Glass Window

## Claims

1. A glass panel unit comprising:
a first glass panel;
a second glass panel;
a third glass panel arranged between the first glass panel and the second glass panel;
a first evacuated space created between the first glass panel and the third glass panel;
a second evacuated space created between the second glass panel and the third glass panel; and
a gas adsorbent arranged, when viewed perpendicularly to a direction in which the first glass panel, the third glass panel, and the second glass panel are laid one on top of another, between a surface, facing the third glass panel, of the first glass panel and a surface, facing the third glass panel, of the second glass panel.

2. The glass panel unit of claim 1, further comprising a connection space communicating with the first evacuated space and the second evacuated space.

3. The glass panel unit of claim 1 or 2, further comprising:
a first seal arranged, when viewed perpendicularly to the direction in which the first glass panel, the third glass panel, and the second glass panel are laid one on top of another, between the first glass panel and the third glass panel; and
a second seal arranged, when viewed perpendicularly to the direction in which the first glass panel, the third glass panel, and the second glass panel are laid one on top of another, between the second glass panel and the third glass panel.

4. The glass panel unit of claim 3, wherein
the first seal has a shape of a frame to hermetically bond the first glass panel and the third glass panel together,
the second seal has a shape of a frame to hermetically bond the second glass panel and the third glass panel together,
the first evacuated space is a space surrounded with the first glass panel, the third glass panel, and the first seal,
the second evacuated space is a space surrounded with the second glass panel, the third glass panel, and the second seal,
the connection space is a through hole provided through the third glass panel, and
at least part of the gas adsorbent is placed inside the through hole.

5. The glass panel unit of claim 3, further comprising a third seal in which at least a part of the first seal and at least a part of the second seal are integrated together.

6. The glass panel unit of claim 3 or 5, wherein
the third glass panel has a recess depressed in a thickness direction, and
at least part of the gas adsorbent is placed inside the recess.

7. The glass panel unit of claim 5, wherein
the connection space is a gap between the third glass panel and the third seal, and
at least part of the gas adsorbent is placed inside the gap.

8. The glass panel unit of any one of claims 1 to 7, further comprising a plurality of first spacers arranged between the first glass panel and the third glass panel.

9. The glass panel unit of any one of claims 1 to 8, further comprising a plurality of second spacers arranged between the second glass panel and the third glass panel.

10. The glass panel unit of any one of claims 1 to 9, wherein
neither the first glass panel nor the second glass panel is provided with the gas adsorbent.

11. A glass window comprising:
the glass panel unit of any one of claims 1 to 10; and
a window frame surrounding peripheral edges of the glass panel unit.
